## Europäisches Patentamt
## European Patent Office
## Office européen des brevets

(19)

(11) Veröffentlichungsnummer: **0 141 157 B1**

(12) **EUROPÄISCHE PATENTSCHRIFT**

(45) Veröffentlichungstag der Patentschrift: **26.08.87**

(51) Int. Cl.⁴: **B 60 L 3/10**

(21) Anmeldenummer: **84110614.9**

(22) Anmeldetag: **06.09.84**

(54) **Schlupfbegrenzungsregelung für Schienenfahrzeuge.**

(30) Priorität: **28.09.83 CH 5251/83**

(43) Veröffentlichungstag der Anmeldung:
**15.05.85 Patentblatt 85/20**

(45) Bekanntmachung des Hinweises auf die Patenterteilung:
**26.08.87 Patentblatt 87/35**

(84) Benannte Vertragsstaaten:
**AT CH DE FR GB IT LI SE**

(56) Entgegenhaltungen:
**DE - A - 2 006 349**
**FR - A - 2 314 500**
**FR - A - 2 351 817**

**BROWN BOVERI REVIEW, Band 63, März 1976, Seiten 160-167, Baden, CH; J.-P. GARNIER u.a.: "Solid-state control systems for thyristor traction vehicles of the societe nationale des chemins de fer Francais (SNCF)"**

(73) Patentinhaber: **BBC Aktiengesellschaft Brown, Boverl & Cie., Haselstrasse, CH-5401 Baden (CH)**

(72) Erfinder: **Riondel, Pierre, rue du Vidollet 52, CH-1202 Genève (CH)**

EP 0 141 157 B1

## Beschreibung

Bei der Erfindung wird ausgegangen von einem Verfahren zur Schlupfregelung bzw. -begrenzung eines Schienenfahrzeuges mit mindestens zwei Antriebsmaschinen nach dem Oberbegriff des Patentanspruchs 1. Die Erfindung betrifft auch eine Schlupfbegrenzungsregelvorrichtung zur Durchführung des Verfahrens.

Mit diesem Oberbegriff nimmt die Erfindung auf einen Stand der Technik von Verfahren zur Schlufpbegrenzung Bezug, wie er in der Schweizer Firmenzeitschrift Brown Boveri Mitteilungen (1976) S. 160 bis 167 beschrieben ist. Dort ist eine Geschwindigkeitsregelung für Thyristorlokomotiven angegeben, bei welcher der Fahrmotorstrom mittels Anschnittsteuerung praktisch verzögerungsfrei einem Regelsollwert folgt. Dieser Regelsollwert wird von einem Regelkreis mit einen PID-Geschwindigkeitsregler geliefert. Dem Regelkreis wird eingangsseitig ein Geschwindigkeitsdifferenzsignal $\triangle v$ = Geschwindigkeitssollwert (am Führerpult eingegeben ) — Geschwindigkeitsistwert (von einem nachlaufenden Drehgestell gewonnen) und ein aus $\triangle v$ durch Differenzieren gebildetes d$\triangle$v/dt-Signal zugeführt. Weiterhin ist in der Regelschaltung ein Glied vorgesehen, welches den Aufbau des Stromsollwertes soweit verlangsamt, dass die Beschleunigungsänderung des Zuges den Wert 0,6 m/s$^3$ nicht überschreitet, um unangenehm hohe Beschleunigungen für Passagiere zu vermeiden, Lastspitzen im speisenden Netz herabzusetzen und den globalen Energieverbrauch zu senken. Am Führerpult kann der Fahrzeugführer den Maximalstrom einstellen, indem der Stromsollwert am Geschwindigkeitsregler begrenzt wird.

Ferner ist ein elektronischer Schleuderschutz vorgesehen, der über den Stromregler des schlüpfenden Drehgestellantriebs auf den Fahrmotorstrom einwirkt, wenn der Schlupf zwischen Rad und Schiene infolge verschlechteter Adhäsionsbedingungen 1,5% der Zuggeschwindigkeit überschreitet. Als Schlupf ist hier die Relativgeschwindigkeit zwischen Rad und Schiene zu verstehen, d.h. die Differenz zwischen Umfangsgeschwindigkeit des Rades und Zuggeschwindigkeit, die z.B. mit einer nichtangetriebenen, sogenannten Laufachse genau messbar wäre. Weiter ist eine Regelschleife vorhanden, welche eine rasche Stromreduktion veranlasst, wenn die Beschleunigung eines Radsatzes 0,8 m/s$^2$ überschreitet. Diese Schleife wird wirksam, wenn sich die Adhäsionsbedingungen schlagartig verschlechtern, z.B. beim Überfahren einer Weiche.

Moderne Triebfahrzeuge haben jedoch keine Laufachse mehr. Man begnügt sich damit, für die Ermittlung der Zuggeschwindigkeit von der Achse mit der kleinsten Drehzahl auszugehen oder sie als Integral der Zugbeschleunigung zu ermitteln und die Zugbeschleunigung aus Fahrmotorstrom, Zugmasse und Summe der Fahrwiderstände zu berechnen. vgl. dazu auch die DE-OS 2 531 032.

Der Kraftschluss zwischen Antriebsrad und Schiene ändert sich in weiten Grenzen in Abhängigkeit vom Reibungskoeffizienten, der in der Regel für jede Achse unterschiedlich ist und somit auch der Schlupf. Bei zunehmendem Schlupf sinkt nach Überschreiten eines Adhäsionsmaximums die übertragbare Zugkraft ab und die Antriebsräder schleudern, wodurch ein erhöhter Verschleiss an Rad und Schiene sowie selbsterregte Reibschwingungen zwischen Fahrmotor und Radsatz bzw. zwischen beiden Radscheiben einer Achse auftreten. Um eine maximale Zugkraft auf die Antriebsräder zu übertragen, sollte bei Schienenfahrzeugen der Schlupf einige km/h betragen, d.h., alle angetriebenen Räder sollten ein wenig schlüpfen. Andererseits kann die Zuggeschwindigkeit nicht in Abhängigkeit von der Achsdrehzahl ermittelt werden, wenn alle angetriebenen Räder gleichzeitig schlüpfen.

Die Erfindung, wie sie in den Ansprüchen gekennzeichnet ist, löst die Aufgabe, ein Verfahren zur Schlupfregelung anzugeben, mit dem es möglich ist, die Fahrzeuggeschwindigkeit eines Schienenfahrzeugs in Abhängigkeit von der Drehzahl eines Antriebsrades genau zu ermitteln und ein Schleudern der Antriebsräder zu vermeiden sowie eine Schlupfbegrenzungsregelvorrichtung anzugeben, mit der das Verfahren ausgeführt werden kann.

Ein Vorteil der Erfindung besteht darin, dass bei der Ermittlung der Fahrzeuggeschwindigkeit eine für die Praxis ausreichende Messgenauigkeit erreicht wird, da bei einem Antriebsrad, das für die Fahrzeuggeschwindigkeitsmessung ausgewählt wird, ein Schlüpfen zumindest kurzzeitig aufgehoben wird, so dass kein Schlupf zwischen Rad und Schiene auftritt. Die Radumfangsgeschwindigkeit ist dann gleich der Fahrzeuggeschwindigkeit. Dabei muss lediglich für das eine Antriebsrad kurzzeitig die Zugkraft reduziert werden. Während einer Langzeitdauer, einschliesslich dieser Kurzzeitdauer, wird jedem Schlupfbegrenzungsregler für jeden Maschinenantrieb ein Geschwindigkeitsbezugswert vorgegeben, der nur einen sehr langsamen Anstieg der Fahrzeuggeschwindigkeit erlaubt, so dass ein Schleudern der Antriebsräder verhindert wird.

Gemäss einer vorteilhaften Ausgestaltung der Erfindung wird die Zugkraft zur Fahrzeuggeschwindigkeitsmessung nur dann weggenommen, wenn ein ausgewähltes Antriebsrad zu schleudern beginnt, d.h. wenn die zeitliche Änderung der Beschleunigung des Radumfangs einen vorgegebenen Grenzwert überschreitet, am besten nur bei der in Fahrtrichtung hintersten Antriebsmaschine. Das Fahrzeug kann damit nahezu mit optimalem Kraftschluss zwischen Rad und Schiene gefahren werden.

Der schaltungsmässige Aufwand zur Erreichung der gewünschten Ergebnisse ist relativ gering. Im wesentlichen genügen ein Kurzzeitdauer- und ein Langzeitdauer-Signalgeber, die einen an sich bekannten Strom- (bzw. Drehmomenten-)regler beaufschlagen. Die zusätzliche Schaltung lässt sich mit wenigen Standardbauelementen herstellen und beansprucht wenig Platz. Es werden zur Weiterverarbeitung nur Messsignale benötigt, wie sie schon in den bisher bekannten Schleuderschutzvorrichtungen vorhanden sein müssen.

Besonders vorteilhaft zur schnellen und sicheren Erfassung eines unzulässig hohen Schlupfes eines Antriebsrades ist die Verwendung eines Ruckdetektors, der ruckartige Radbewegungen erfasst, die dann auf eine Grenzwertüberscheitung überwacht werden können.

Die Erfindung wird nachstehend anhand eines Ausführungsbeispiels erläutert. Es zeigen:

Fig. 1 das Prinzipschema eines Schlupfbegrenzungs- und Stromreglers für eine Antriebsmaschine eines Schienenfahrzeugs,

Fig. 2 eine Schaltungsanordnung für die Ermittlung ruckartiger Bewegungen, die gleichzeitig bei allen Antriebsrädern auftreten, sowie für die Erzeugung von Kurz- und Langzeitdauersignalen zur Beaufschlagung des Schlupfbegrenzungsreglers nach Fig. 1 und

Fig. 3 ein Geschwindigkeits-Zeitdiagramm für zwei Antriebsräder bei Vorhandensein von Schlupf.

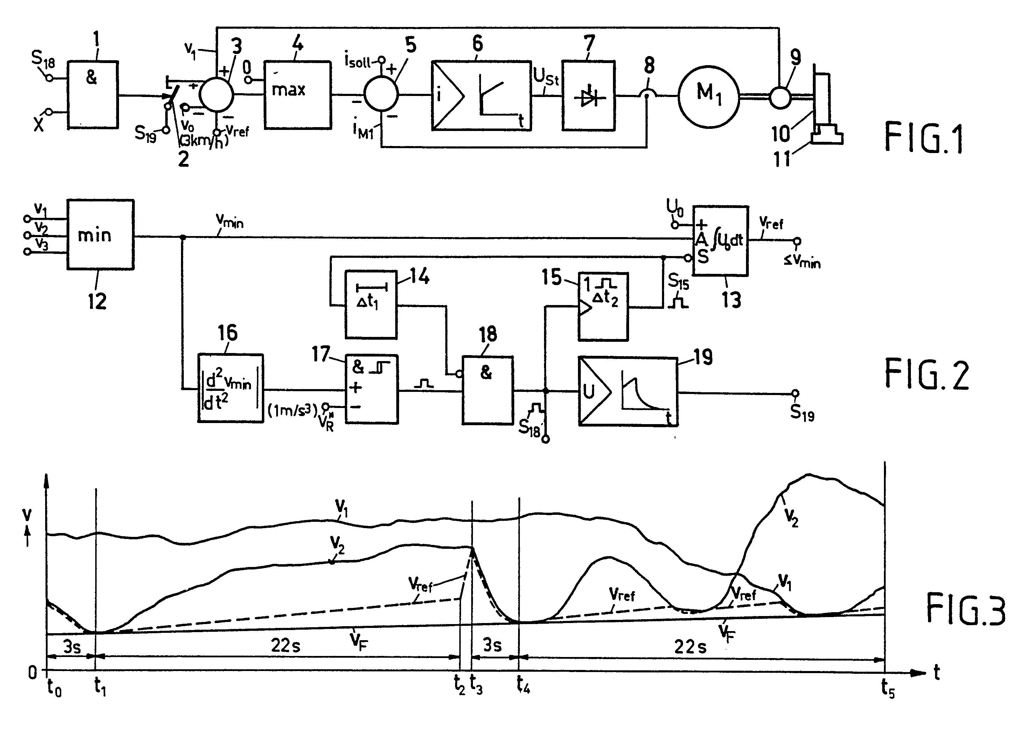

Die Erfindung bezieht sich auf die Schlupfbegrenzungsregelung eines nichtdargestellten Schienenfahrzeugs, beispielsweise einer elektrisch angetriebenen Lokomotive, die mehrere Antriebsmaschinen bzw. Antriebsmotore $M_1$ ... aufweist. Jede Antriebsmaschine wirkt über eine Antriebsachse auf mindestens ein Antriebsrad 10, im allgemeinen auf einen nichtdargestellten Antriebsradsatz. Jeder Antriebsmaschine ist ein Schlupfbegrenzungsregler gemäss Fig. 1 zugeordnet.

Der in Fig. 1 als Prinzipschema dargestellte Schlupfbegrenzungsregler weist ein Geschwindigkeits-Summationsglied 3 auf, dem über « + »-Eingänge ein Radumfangsgeschwindigkeitssignal $v_1$ und über einen elektronischen Schalter 2 ein Schlupfreduzierungssignal $S_{19}$ und über «–»-Eingänge ein Geschwindigkeitsbezugswertsignal $v_{ref}$ und ein vorgebbares Schlupf-Grenzgeschwindigkeitssignal $v_o$, entsprechend einer Geschwindigkeit von vorzugsweise 3 km/h zugeführt sind. Der Schalter 2 wird mittels eines UND-Gliedes 1 geschaltet, in Abhängigkeit von einem Kurzzeitdauersignal $S_{18}$ und einem Bezugsmotorsignal X, das bei dem in Fahrtrichtung des Schienenfahrzeugs hintersten Motor auf logisch « 1 » gesetzt wird und bei allen übrigen Motoren bzw. Antriebsmaschinen auf logisch «0». Der Schalter 2 ist geschlossen, wenn beide Eingangssignale des UND-Gliedes 1 logisch « 1 » aufweisen. Das Kurzzeitdauersignal $S_{18}$, das Geschwindigkeitsbezugswertsignal $v_{ref}$ und das Schlupfreduzierungssignal $S_{19}$ werden von der Schaltungsanordnung nach Fig. 2 geliefert.

Der Ausgang des Geschwindigkeits-Summationsgliedes 3 ist mit einem Eingang eines Grösstwertgliedes 4 verbunden. An einem weiteren Eingang dieses Grösstwertgliedes 4 liegt ein «0»-Signal an, so dass das Ausgangssignal des Grösstwertgliedes nur grösser oder gleich 0 sein kann.

Der Ausgang dieses Grösstwertgliedes 4 ist mit einem «–»-Eingang eines Strom-Summationsgliedes 5 verbunden. Ein weiterer «–»-Eingang dieses Strom-Summationsgliedes 5 steht mit dem Ausgang eines Strommessers 8 in Verbindung, der ein Stromistwertsignal $i_{M1}$ des Motors $M_1$ liefert. Einem « + »-Eingang des Strom-Summationsgliedes 5 ist ein Stromsollwertsignal $i_{soll}$ zugeführt. Dieses Stromsollwertsignal $i_{soll}$ wird z.B. von einem Geschwindigkeitsregler auf bekannte Weise, siehe z.B. Brown Boveri Mitteilungen (1976) S. 162, in Abhängigkeit von vorgebbaren Maximalwerten von z.B. Fahrmotorstrom und Fahrzeuggeschwindigkeit vorgegeben.

$i_{soll}$ kann auch direkt von einem Sollwertpotentiometer stammen.

Das Ausgangssignal des Strom-Summationsgliedes 5 ist dem Eingang eines Stromreglers 6 mit Proportional-Integral- bzw. PI-Charakteristik zugeführt, der ausgangsseitig ein Steuerspanungssignal $U_{St}$ an einen Stromrichter mit zugehöriger Steuereinrichtung 7 liefert. Dieser Stromrichter 7 steuert in Abhängigkeit von diesem Steuerspannungssignal $U_{St}$ den Fahrmotorstrom des Motors bzw. der Antriebsmaschine $M_1$.

Mit der Achse des Motors $M_1$ ist ein Tachometergenerator 9 starr gekoppelt, der ausgangsseitig das Radumfangsgeschwindigkeitssignal $v_1$ liefert, das proportional zur Drehzahl des Motorachse ist. Über die Motorachse wird gleichzeitig mindestens ein Antriebsrad bzw. ein Antriebsradsatz 10 des Schienenfahrzeugs angetrieben, das auf einer Schiene 11 rollen oder bei hoher Zugkraftübertragung schlüpfen kann.

Die Schaltungsanordnung nach Fig. 2 weist ein Kleinstwertglied 12 auf, dem eingangsseitig alle Radumfangsgeschwindigkeitssignale $v_1$, $v_2$, $v_3$, ... zugeführt sind, die von den durch Motore $M_1$ ... angetriebenen Antriebsrädern bzw. Antriebsradsätzen abgeleitet sind.

Das Kleinstwertglied 12 liefert ausgangsseitig ein Geschwindigkeitskleinstwertsignal $v_{min}$, das einerseits dem Initialisierungseingang A eines Integrators 13 und andererseits dem Eingang eines Ruckdetektors bzw. eines Zweifach-Differenziergliedes mit Betragsbildung 16 zugeführt ist, das ausgangsseitig ein Signal liefert, das proportional zu $| d^2v_{min}/dt^2 |$ ist. Dieses Ausgangssignal des Ruckdetektors 16 ist mit dem « + »-Eingang eines Schwellwertgliedes bzw. Schmitt-Triggers 17 mit zwei Eingängen zugeführt. Dem zweiten Eingang, der ein invertierender Eingang ist, ist ein vorgebbares Ruckschwellwertsignal $v_R''$, entsprechend einem Ruck von vorzugsweise 1 m/s$^3$, zugeführt. Der Schmitt-Trigger 17 erzeugt an seinem Ausgang ein binäres « 1 »-Signal, solange das Signal an seinem « + »-Eingang grösser ist als das Signal an seinem invertierenden oder «–»-Eingang.

Das Ausgangssignal des Schmitt-Triggers 17 ist einem Eingang eines UND-Gliedes 18 zugeführt, dessen zweiter negierter Eingang mit dem Ausgang eines Zeitgliedes mit Ansprechverzögerung 14 mit einer vorgebbaren Ansprech-Totzeit $\triangle t_1$ von vorzugsweise 3 s verbunden ist. Der Ausgang des UND-Gliedes 18 ist mit einem Eingang des UND-Gliedes 1, siehe Fig. 1, mit einem Eingang eines PI-Reglers 19 und mit einem Triggereingang eines monostabilen Kippgliedes 15 verbunden; an ihm ist das Kurzzeitdauersignal $S_{18}$ abgreifbar. Es ist ein binäres « 1 »-Signal mit einer maximalen Dauer von $\triangle t_1$.

Der PI-Regler 19 weist einen eingebauten Sollwertgeber auf und liefert ausgangsseitig das Schlupfreduzierungssignal $S_{19}$, das dem Schalter 2 in Fig. 2 zugeführt ist. Die Integration erfolgt während der Dauer des Kurzzeitdauersignals $S_{18}$. Danach nimmt die Spannung U des Schlupfreduzierungssignals $S_{19}$ relativ rasch ab; sie verschwindet vorzugsweise innerhalb von 12 s.

Das monostabile Kippglied 15 erzeugt ausgangsseitig das Langzeitdauersignal $S_{15}$, das ein binäres

«1»-Signal mit einer vorgebbaren Langzeitdauer $\triangle t_2$ von vorzugsweise 25 s ist. Dieses Langzeitdauersignal $S_{15}$ ist einerseits dem Eingang des Zeitgliedes 14 und andererseits dem Setzeingang S des Integrators 13 zugeführt.

Dem Integrator 13 ist an einem « + »-Eingang eine vorgebbare kleine Anfangsspannung $U_o$ zugeführt, entsprechend einem Anstieg des Geschwindigkeitsbezugswertsignals $v_{ref}$ am Ausgang des Integrators von vorzugsweise 0,1 m/s$^2$. Die Integration von $U_o$ erfolgt während der Langzeitdauer $\triangle t_2$ des Langzeitdauersignals $S_{15}$. Das integrierte Signal wird mit $v_{min}$ verglichen; überschreitet es den Wert von $v_{min}$, so ist das Ausgangssignal $v_{ref} = v_{min}$. Nach Beendigung der Integration wird $v_{ref}$ schnell auf den Wert von $v_{min}$ gebracht, falls $v_{ref} \neq v_{min}$ ist. Ein derartiger Integrator mit den Betriebsarten: integrieren, halten, Anfangsbedingung setzen, ist z.B. aus dem deutschen Buch: U. Tietze, Ch. Schenk, Halbleiter-Schaltungstechnik, 5. Aufl., Springer-Verlag, Berlin-Heidelberg-New York, 1980, S. 199, Abb. 11.9, bekannt.

Die Schaltung nach Fig. 2 wird für ein Schienenfahrzeug nur einmal benötigt. Die Ausgangssignale $S_{18}$, $S_{19}$ und $v_{ref}$ werden allen Schlupfbegrenzungsreglern gemäss Fig. 1 zugeführt.

Die Wirkung der erfindungsgemässen Schaltung nach den Fig. 1 und 2 soll nun anhand des Geschwindigkeits-Zeitdiagramms von Fig. 3 erläutert werden, indem v die Geschwindigkeit und t die Zeit bedeuten. Die Fahrzeuggeschwindigkeit $v_F$ sowie die Radumfangsgeschwindigkeit $v_1$ und $v_2$ von zwei Antriebsrädern 10 sind ausgezogen dargestellt und der Geschwindigkeitsbezugswert $v_{ref}$ gestrichelt. Der Einfachheit halber sind die physikalischen Grössen und die ihnen zugeordneten Signale gleich bezeichnet.

Zum Zeitpunkt $t_o$ sind die Radumfangsgeschwindigkeiten $v_1$ und $v_2$ grösser als die Fahrzeuggeschwindigkeit $v_F$, die sehr langsam ansteigt; die Antriebsräder schlüpfen folglich. Zum Zeitpunkt $t_o$ hat der Schmitt-Trigger 17 mit einem «1»-Signal am Ausgang angesprochen, da das Ausgangssignal des Ruckdetektors 16 grösser als das vorgegebene Ruckschwellwertsignal $v_R''$ ist. Da die Ruckdetektion vom Geschwindigkeitskleinstwert $v_{min}$ durch zweifache Differentiation abgeleitet ist, schlüpfen folglich sämtliche Antriebsräder simultan. Das Ausgangssignal des Zeitgliedes 14 ist logisch «0», so dass das UND-Glied 18 bei Eintreffen eines «1»-Signals vom Schmitt-Trigger 17 an seinem Ausgang ein Kurzzeitdauersignal $S_{18}$ = «1» liefert. Dieses Signal bewirkt über den Triggereingang des monostabilen Kippgliedes 15 ein Langzeitdauersignal $S_{15}$ = «1» an dessen Ausgang. Dieses Langzeitdauersignal $S_{15}$ erscheint über das Zeitglied 14 mit einer Verzögerung von einer vorgebbaren Ansprech-Totzeit $\triangle t_1$ = 3 s am negierten Eingang des UND-Gliedes 18, so dass dessen Ausgangssignal den Wert «0» annimmt. $S_{18}$ ist so lange auf «1», solange das Ausgangssignal des Schmitt-Triggers 17 auf «1» ist, höchstens jedoch während der Ansprech-Totzeit $\triangle t_1$. Solange $S_{18}$ = «1» ist, solange integriert der PI-Regler 19 und liefert das Schlupfreduziersignal $S_{19}$ an den Eingang des Schalters 2 aller Schlupfbegrenzungsregler.

Das Geschwindigkeitsbezugswertsignal $v_{ref}$ am Ausgang des Integrators 13 ist stets $\leq v_{min}$. Sobald $S_{15}$ = «1» ist, kann $v_{ref}$ nur sehr langsam ansteigen, und zwar mit einer vorgebbaren Steigung, jedoch nie grösser werden als $v_{min}$.

Zum Zeitpunkt $t_o$ ist $v_2 = v_{min}$. Der zu $v_2$ gehörige Radsatz sei der in Fahrtrichtung hinterste. Für den zugehörigen Geschwindigkeitsregler ist das Bezugsmotorsignal X = «1» gesetzt, so dass dessen UND-Glied 1 zur Abgabe eines Schaltsignals für den Schalter 2 vorbereitet ist, sobald ein Kurzdauersignal $S_{18}$ = «1» eintrifft. Für diesen Geschwindigkeitsregler wird nun das Schlupfreduzierungssignal $S_{19}$ so lange dem Geschwindigkeits-Summationsglied 3 zugeführt, solange $S_{18}$ = «1» ist. Während dieser Zeitdauer von 3 s wird die Zugkraft des zugehörigen Motors mittels seines Schlupfbegrenzungsreglers so weit reduziert, dass der Schlupf des zugehörigen Antriebsrades verschwindet und die Geschwindigkeit $v_2$ gleich der Fahrzeuggeschwindigkeit $v_F$ wird, Zeitpunkt $t_1$. Auf die anderen Geschwindigkeitsregler wirkt das Schlupfreduzierungssignal $S_{19}$ nicht, da deren Bezugsmotorsignal X = «0» ist; $v_1$ wird lediglich über $v_{ref}$ beeinflusst.

Zum Zeitpunkt $t_1$ kann folglich die Fahrzeuggeschwindigkeit $v_F$ genau ermittelt werden, was Ziel der Erfindung ist.

Da zum Zeitpunkt $t_o$ der Integrator 13 durch das Langzeitdauersignal $S_{15}$ = «1» gesetzt wurde, kann $v_{ref}$ während der vorgebbaren Langzeitdauer $\triangle t_2$ von 25 s zwar schnell entsprechend $v_{min}$ abfallen, aber nur sehr langsam ansteigen bis zum Zeitpunkt $t_2$, wonach ein schneller Anstieg auf $v_{min} = v_2$ erfolgt, Zeitpunkt $t_3$.

Zu diesem Zeitpunkt $t_3$ spricht der Schmitt-Trigger 17 erneut an, es folgt eine schnelle Geschwindigkeitsverringerung von $v_2$ auf den Wert $v_F$ innerhalb von 3 s bis zum Zeitpunkt $t_4$. Danach steigt $v_2$ relativ stark an, $v_{ref}$ jedoch nur mit vorgebbarer Steigung. $v_{ref}$ kann jedoch nie grösser werden als $v_{min}$; dies ist im Intervall von $t_4$ bis $t_5$ einmal der Fall bei $v_2$ und einmal bei $v_1$.

Erwünscht ist es, dass die Werte von $v_1$ und $v_2$ stets ein wenig, jedoch nicht zuviel über dem Wert $v_F$ liegen, um die grösstmögliche Zugkraft übertragen zu können. Dies wird durch den geringen Anstieg von $v_{ref}$, durch den gleichzeitig ein Schleudern der Antriebsräder vermieden wird, mit gutem Erfolg erreicht. Die relativ kurzfristige Reduzierung der Zugkraft während etwa 10% der Fahrzeit bei periodisch erfolgender Reduzierung bei nur einem Antriebsrad stört dabei wenig; sie ermöglicht die genaue Ermittlung der Fahrzeuggeschwindigkeit $v_F$ und eine sichere Geschwindigkeitsregelung des Schienenfahrzeugs.

Die Erfindung ist auf die in den Figuren dargestellten Schaltungen selbstverständlich nicht beschränkt. So können z.B. anstelle der PI-Regler 6 und 19 auch Proportional-Integral-Differential- bzw. PID-Regler verwendet werden. Wichtig ist, dass bei einer Antriebsachse die Radumfangsgeschwindigkeit kurzfristig reduziert wird, so dass dieses Antriebsrad rollt und nicht schlüpft, zur Ermittlung der Fahrzeuggeschwindigkeit, und dass während einer vorgebbaren Langzeitdauer ein Geschwindigkeitsbezugswertsignal mit geringem Geschwindigkeitsanstieg (grösser als die Fahrzeuggeschwindigkeit) vorgegeben wird. Als Geschwindigkeitsanstieg könnte auch ein Wert vorgegeben werden, der zuvor, d.h. bei noch schlupffreiem Betrieb (Ruckdetektor hat nicht angesprochen), gemessen und bei Erscheinen des Rucksignals abgespeichert wurde, jedoch um einige 10% reduziert. Vorteilhaft ist es, einen Ruckdetektor zur Initialisierung dieser Massnahmen zu verwenden.

**Patentansprüche**

1. Verfahren zur Schlupfbegrenzung an einem Schienenfahrzeug mit mindestens zwei Antriebsmaschinen

a) wobei jeder Antriebsmaschine ($M_1$) eine Schlupfbegrenzungsregelung zugeordnet ist und

b) bei jeder derartigen Schlupfbegrenzungsregelung ein Stromsollwert ($i_{soll}$) in Abhängigkeit von der Differenz einer Radumfangsgeschwindigkeit ($v_1$, $v_2$, $v_3$), die von einer Antriebsachse der zugehörigen Antriebsmaschine abgeleitet ist, und eines um einen vorgebbaren Schlupfgrenzsollwert ($v_o$) erhöhten Geschwindigkeitsbezugswertes ($v_{ref}$) beeinflusst wird, dadurch gekennzeichnet,

c) dass mindestens bei den Antriebsrädern einer Antriebsmaschine ($M_1$) innerhalb einer vorgebbaren Kurzzeitdauer ($\triangle t_1$) ein Schlüpfen zwischen Antriebsrad und Schiene beseitigt wird, um die Radumfangsgeschwindigkeit ($v_1$) und die Fahrzeuggeschwindigkeit ($v_F$) einander anzugleichen und dadurch die Fahrzeuggeschwindigkeit ($v_F$) zu ermitteln, und

d) dass während einer vorgebbaren Langzeitdauer ($\triangle t_2$) ein Geschwindigkeitsbezugswert ($v_{ref}$), der am Ende der Kurzzeitdauer ($\triangle t_1$) dem ermittelten Fahrzeuggeschwindigkeitwert ($v_F$) entspricht, für die Schlupfbegrenzungsregelung jeder Antriebsmaschine vorgegeben wird, entsprechend einer angenommenen, sehr langsamen Geschwindigkeitserhöhung des Schienenfahrzeugs.

2. Verfahren nach Anspruch 1, dadurch gekennzeichnet, dass die Beseitigung des Schlüpfens zwischen Antriebsrad und Schiene in Abhängigkeit von einer Grenzwertüberschreitung der zeitlichen Änderung der Beschleunigung ($d^2v/dt^2$) des Radumfangs mindestens eines Antriebsrades erfolgt.

3. Verfahren nach Anspruch 2, dadurch gekennzeichnet, dass die zeitliche Änderung der Beschleunigung ($d^2v_{min}/dt^2$) des Radumfangs des Antriebsrades mit der kleinsten Radumfangsgeschwindigkeit zur Detektion einer Grenzwertüberschreitung verwendet wird.

4. Verfahren nach einem der Ansprüche 1 bis 3, dadurch gekennzeichnet, dass zur Beseitigung des Gleitens der Antriebsstrom ($i_{M1}$) nur einer Antriebsmaschine, insbesondere der Antriebsmaschine des in Fahrtrichtung hintersten Antriebsrades, schnell verringert wird.

5. Schlupfbegrenzungsregelvorrichtung für ein Schienenfahrzeug mit mindestens zwei Antriebsmaschinen ($M_1$ ...)

a) wobei jeder Antriebsmaschine ($M_1$ ...) ein Schlupfbegrenzungsregler zugeordnet ist, der die Geschwindigkeit mindestens eines von der Antriebsmaschine angetriebenen Rades in Abhängigkeit von der Differenz aus der Radumfangsgeschwindigkeit ($v_1$ ...), die von einer Antriebsachse der Antriebsmaschine abgeleitet ist, und eines um einen vorgebbaren Schlupfsollwert ($v_o$) erhöhten Geschwindigkeitsbezugswertes ($v_{ref}$) regelt bzw. begrenzt und

b) mindestens ein Geschwindigkeits-Summationsglied (3) aufweist, dadurch gekennzeichnet,

c) dass ein Kurzzeitdauer-Signalgeber (1, 2, 14, 15, 18, 19) vorgesehen ist, der ein Schlupfreduzierungssignal ($S_{19}$) erzeugt,

d) dass das Schlupfreduzierungssignal ($S_{19}$) während einer Kurzzeitdauer ($\leq \triangle t_1$) mit dem Geschwindigkeits-Summationsglied (3) mindestens eines Schlupfbegrenzungsreglers in Wirkverbindung steht, im Sinne einer Verringerung der Radumfangsgeschwindigkeit des zugehörigen Antriebsrades (10), wobei die Radumfangsgeschwindigkeit innerhalb dieser Kurzzeitdauer so reduziert wird, dass das Antriebsrad (10) auf einer Schiene (11) nicht mehr schlüft, um die Radumfangsgeschwindigkeit ($v_1$) und die Fahrzeuggeschwindigkeit ($v_F$) einander anzugleichen und dadurch die Fahrzeuggeschwindigkeit zu ermitteln,

e) dass ein Langzeitdauer-Signalgeber (15, 13) vorgesehen ist, der ein Geschwindigkeitsbezugswertsignal ($v_{ref}$) erzeugt, dessen Wert am Ende der Kurzzeitdauer dem ermittelten Fahrzeuggeschwindigkeitwert ($v_F$) entspricht,

f) und dass das Geschwindigkeitsbezugswertsignal während einer vorgebbaren Langzeitdauer ($\triangle t_2$) einen sehr langsam ansteigenden Wert aufweist.

6. Schlupfbegrenzungsregelvorrichtung nach Anspruch 5, dadurch gekennzeichnet,

a) dass ein Ruckdetektor (16), zur Detektion des Betrages der zeitlichen Änderung der Beschleunigung ($d^2v_{min}/dt^2$) des Radumfangs vorgesehen ist,

b) dem eingangsseitig mindestens ein Radumfangsgeschwindigkeitsignal ($v_1$ ...) mindestens eines Antriebsrades des Schienenfahrzeugs zugeführt ist und

c) der ausgangsseitig über ein Schwellwertglied (17) mit vorgebbarem Ruckschwellwert ($v_R''$) mit dem Kurzzeitdauer-Signalgeber (1, 2, 14, 15, 18, 19) in Wirkverbindung steht.

7. Schlupfbegrenzungsregelvorrichtung nach Anspruch 6, dadurch gekennzeichnet, dass der Ruckdetektor (16) eingangsseitig mit dem Ausgang eines Kleinstwertgliedes (12) in Wirkverbindung steht, dem eingangsseitig mehrere Radumfangsgeschwindigkeitssignale ($v_1$, $v_2$, $v_3$) von mehreren Antriebsrädern des Schienenfahrzeugs zugeführt sind und an dessen Ausgang ein Geschwindigkeitskleinstwertsignal ($v_{min}$) anliegt.

8. Schlupfbegrenzungsregelvorrichtung nach Anspruch 6 oder 7, dadurch gekennzeichnet,

a) dass der Kurzzeitdauer-Signalgeber (1, 2, 14, 15, 18, 19) einen Proportional-Integral-Regler (19) aufweist, der für die Dauer eines Kurzzeitdauer-signals ($S_{18}$) das Schlupfreduzierungssignal ($S_{19}$) erzeugt,

b) wobei das Kurzzeitdauersignal ($S_{18}$) durch ein Ausgangssignal des Schwellwertgliedes (17), das einer Grenzwertüberschreitung des Ruckes zwischen Antriebsrad und Schiene zugeordnet ist, ausgelöst wird,

c) insbesondere, dass das Kurzzeitdauersignal ($S_{18}$) eine Länge kleiner oder gleich 3 s Dauer aufweist.

9. Schlupfbegrenzungsregelvorrichtung nach Anspruch 8, dadurch gekennzeichnet,

a) dass der Langzeitdauer-Signalgeber (15, 13) ein monostabiles Kippglied (15) aufweist, das durch das Kurzzeitdauersignal ($S_{18}$) ein Langzeitdauer-signal ($S_{15}$) mit vorgebbarer Langzeitdauer ($\triangle t_2$) erzeugt,

b) insbesondere, dass die Langzeitdauer etwa 25 s ist.

c) dass der Langzeitdauer-Signalgeber (15, 13) ferner einen Integrator (13) aufweist, der für die Dauer dieses Langzeitdauersignals ($S_{15}$) das Ge-schwindigkeitsbezugswertsignal ($v_{ref}$) erzeugt,

d) wobei dem Integrator (13) eingangsseitig das Geschwindigkeitskleinstwertsignal ($v_{min}$) zuge-führt ist,

e) das als Geschwindigkeitsbezugswertsignal ($v_{ref}$) am Ausgang des Integrators anliegt, wenn kein Langzeitdauersignal ($S_{15}$) vorhanden ist und

f) wobei dieses Geschwindigkeitskleinstwertsi-gnal ($v_{min}$) oberer Grenzwert für das Geschwin-digkeitsbezugswertsignal ($v_{ref}$) ist, wenn ein Langzeitdauersignal ($S_{15}$) vorhanden ist.

10. Schlupfbegrenzungsregelvorrichtung nach einem der Ansprüche 5 bis 9, dadurch gekennzeichnet,

a) dass das Geschwindigkeits-Summationsglied (3) über einen « + »-Eingang mit dem Radumfangs-geschwindigkeitssignal ($v_1$ ...) des dem Ge-schwindigkeitsregler zugeordneten Antriebsra-des (10) in Wirkverbindung steht,

b) über einen «–»-Eingang mit einem vorgebbaren Schlupfreduzierungssignal ($v_o$),

c) über einen weiteren «–»-Eingang mit dem Ge-schwindigkeitsbezugswertsignal ($v_{ref}$) und

d) über einen weiteren « + »-Eingang mit dem Schlupfreduzierungssignal ($S_{19}$),

e) dass das Geschwindigkeits-Summationsglied (3) über ein Grösstwertglied (4) mit einem Vergleichswert «0»

f) mit einem «–»-Eingang eines Strom-Summationsgliedes (5) in Wirkverbindung steht,

g) dem über einen weiteren «–»-Eingang ein Stromistwertsignal ($i_{M1}$) der zugehörigen Antriebsma-schine ($M_1$) und

h) über einen « + »-Eingang ein Stromsollwertsignal ($i_{soll}$) zugeführt ist,

i) dass der Ausgang des Strom-Summationsgliedes (5) über einen Stromregler (6)

j) mit einem Stromrichter (7) für die Stromversor-gung der Antriebsmaschine ($M_1$) in Wirkverbin-dung steht.

**Claims**

1. Method for limiting slip on a rail vehicle having at least two drive motors,

a) in which a slip limiting regulator is assigned to each drive motor ($M_1$) and

b) in each such slip limiting regulator a nominal current value ($i_{soll}$) is influenced as a function of the difference between a circumferential wheel velocity ($v_1$, $v_2$, $v_3$), which is derived from a drive shaft of the associated drive motor, and a velocity reference value ($v_{ref}$) which is increased by a predeterminable limit nominal slip value ($v_o$), characterized in that

c) at least in the case of the drive wheels of a drive motor ($M_1$), slipping between drive wheel and rail is eliminated within a predeterminable short period ($\triangle t_1$) to match the circumferential wheel velocity ($v_1$) and the vehicle velocity ($v_F$) to each other and by this means to determine the vehicle velocity ($v_F$), and in that

d) during a predeterminable long period ($\triangle t_2$) a reference velocity value ($v_{ref}$), which corresponds to the vehicle velocity value ($v_F$) determined at the end of the short period ($\triangle t_1$), is predetermined for the slip limiting regulator of each drive motor in accordance with an assumed very slow increase in velocity of the rail vehicle.

2. Method according to Claim 1, characterized in that the elimination of the slipping between drive wheel and rail takes place as a function of a limit value of the time change of the acceleration ($d^2v/dt^2$) of the wheel circumference of at least one drive wheel being exceeded.

3. Method according to Claim 2, characterized in that the time change of the acceleration ($d^2v_{min}/dt^2$) of the wheel circumference of the drive wheel with the lowest circumferential wheel velocity is used for detecting a transgression of the limit value.

4. Method according to one of Claims 1 to 3, characterized in that the drive current ($i_{M1}$) of only one drive motor, in particular of the drive motor of the drive wheel which is rearmost in the direction of motion, is rapidly reduced for eliminating the sliding.

5. Slip limiting regulator device for a rail vehicle having at least two drive motors ($M_1$ ...)

a) in which to each drive motor ($M_1$ ...) a slip limiting regulator is assigned which regulates or limits the velocity of at least one wheel driven by the drive motor as a function of the difference between the circumferential wheel velocity ($v_1$ ...), which is derived from a drive shaft of the drive motor, and a velocity reference value ($v_{ref}$) which is increased by a predeterminable nominal slip value ($c_o$) and

b) has at least one velocity summing element (3), characterized in that

c) a short-period signal transmitter (1, 2, 14, 15, 18, 19) is provided which generates a slip reducing signal ($S_{19}$),

d) in that the slip reducing signal ($S_{19}$) is effec-tively connected to the velocity summing element (3) of at least one slip limiting regulator during a short period ($\leq \triangle t_1$), in the sense of a reducing of the circumferential wheel velocity of the associated drive wheel (10), the circumferential wheel velocity being reduced within this short period to such an extent that the drive wheel (10) no longer slips on a rail (11), to match the circumferential wheel velocity ($v_1$) to the vehicle velocity ($v_F$) and to determine by this means the vehicle velocity,

e) in that a long-period signal transmitter (15, 13) is provided which generates a velocity reference value signal ($v_{ref}$) the value of which corresponds to the vehicle velocity value ($v_F$) determined at the end of the short period.

f) and in that the velocity reference value signal exhibits a value which rises very slowly during a predeterminable long period ($\triangle t_2$).

6. Slip limiting regulator device according to Claim 5, characterized in that

a) a rate-of-change detector (16) is provided for detecting the amount of change in time of the acceleration ($d^2 v_{min}/dt^2$) of the wheel circumference,

b) the input of which detector is supplied with at least one circumferential wheel velocity signal ($v_1$ ...) of at least one drive wheel of the rail vehicle, and

c) the output of which detector is effectively connected via a threshold value element (17) with predeterminable rate-of-change threshold value ($v_R''$) to the short-period signal transmitter (1, 2, 14, 15, 18, 19).

7. Slip limiting regulator device according to Claim 6, characterized in that the input of the rate-of-change detector (16) is effectively connected to the output of a valley value element (12) the input of which is supplied with several circumferential wheel velocity signals ($v_1$, $v_2$, $v_3$) from several drive wheels of the rail vehicle and at the output of which a velocity valley value signal ($v_{min}$) is present.

8. Slip limiting regulator device according to Claim 6 or 7, characterized in that

a) the short-period signal transmitter (1, 2, 14, 15, 18, 19) has a proportional/integral controller (19) which generates the slip reducing signal ($S_{19}$) for the duration of a short-period signal ($S_{18}$),

b) in which arrangement the short-period signal ($S_{18}$) is enabled by an output signal of the threshold value element (17) which signal is associated with a limit value of the rate of change between the drive wheel and the rail being exceeded,

c) in particular, in that the short-period signal ($S_{18}$) has a length of less than or equal to 3 s duration.

9. Slip limiting regulator device according to Claim 8, characterized in that

a) the long-period signal transmitter (15, 13) has a monostable flipflop (15) which generates a long-period signal ($S_{15}$) with predeterminable long period ($\triangle t_2$) by means of the short-period signal ($S_{18}$),

b) in particular, in that the long period is about 25 s,

c) in that the long-period signal transmitter (15, 13) also has an integrator (13) which generates the reference value signal ($v_{ref}$) for the duration of this long-period signal ($S_{15}$),

d) the input of the integrator (13) being supplied with the velocity valley value signal ($v_{min}$),

e) which is present as velocity reference value signal ($v_{ref}$) at the output of the integrator if no long-period signal ($S_{15}$) is present and

f) in which arrangement this velocity valley value

signal ($v_{min}$) is the upper limit value for the velocity reference value signal ($v_{ref}$) if a long-period signal ($S_{15}$) is present.

10. Slip limiting regulator device according to one of Claims 5 to 9, characterized in that

a) the velocity summing element (3) is effectively connected via a « + » input to the circumferential wheel velocity signal ($v_1$ ...) of the drive wheel (10) associated with the velocity controller,

b) via a «–» input to a predeterminable slip limit velocity signal ($v_o$),

c) via another «–» input to the velocity reference value signal ($v_{ref}$) and

d) via another « + » input to the slip reducing signal ($S_{19}$),

e) in that the velocity summing element (13) is effectively connected via a peak value element (4) having a reference value «0»

f) to a «–» input of a current summing element (5),

g) which is supplied via another «–» input with an actual current value signal ($i_{M1}$) of the associtated drive motor ($M_1$) and

h) via a « + » input with a nominal current value signal ($i_{soll}$),

i) in that the output of the current summing element (5) is effectively connected via a current regulator (6)

j) to a static converter (7) for supplying the drive motor ($M_1$) with power.

**Revendications**

1. Procédé de limitation du glissement d'un véhicule ferroviaire comportant au moins deux groupes d'entraînement, suivant lequel

a) une régulation de limitation de glissement est associée à chaque groupe d'entraînement ($M_1$), et

b) pour chaque de ces régulations de limitation de glissement, une valeur de consigne de courant ($i_{soll}$) étant influencée en fonction de la différence d'une vitesse périphérique de roue ($v_1$, $v_2$, $v_3$) qui est dérivée d'un arbre moteur du groupe d'entraînement associé, et d'une valeur de référence de vitesse ($v_{ref}$) augmentée d'une valeur de consigne de limite de glissement ($v_o$) pouvant être prédéfinie, caractérisé en ce que

c) un glissement entre roue motrice et rail est éliminé au moins pour les roues motrices d'un groupe d'entraînement ($M_1$), dans les limites d'une période de courte durée ($\triangle t_1$) pouvant être prédéfinie, pour égaliser la vitesse périphérique de roue ($v_1$) et la vitesse ($v_F$) du véhicule et ainsi déterminer la vitesse ($v_F$) du véhicule, et

d) pendant une période de longue durée ($\triangle t_2$) pouvant être prédéfinie, une valeur de référence de vitesse ($v_{ref}$) qui correspond à la fin de la période de courte durée ($\triangle t_1$) à la vitesse du véhicule déterminée ($v_F$), est prédéfinie pour la régulation de limitation de glissement de chaque groupe d'entraînement d'une manière correspondant à une augmentation de vitesse admise très lente du véhicule ferroviaire.

2. Procédé suivant la revendication 1, caractérisé en ce que l'élimination du glissement entre roue motrice et rail s'effectue en fonction d'un dépassement par excès de valeur limite de la variation dans le temps de l'accélération $|d^2v/dt^2|$ de la périphérie d'au moins une roue motrice.

3. Procédé suivant la revendication 2, caractérisé en ce que la variation dans le temps de l'accélération $|d^2v_{min}/dt^2|$ de la périphérie de la roue motrice animée de la plus petite vitesse périphérique est utilisée pour la détection d'un dépassement par excès de valeur limite.

4. Procédé suivant l'une quelconque des revendications 1 à 3, caractérisé en ce que pour éliminer le glissement, le courant de traction $(i_{M1})$ d'un seul groupe d'entraînement, en particulier du groupe d'entraînement de la roue postérieure dans le sens d'avancement, est rapidement réduit.

5. Dispositif de régulation de limitation de glissement pour un véhicule ferroviaire comportant au moins aeux groupes d'entraînement $(M_1 ...)$, dans lequel

a) à chaque groupe d'entraînement $(M_1 ...)$ est associé un régulateur de limitation de glissement qui règle ou limite la vitesse d'au moins une roue entraînée par le groupe d'entraînement en fonction de la différence entre la vitesse périphérique de roue $(v_1 ...)$, qui est dérivée d'un arbre moteur du groupe d'entraînement, et d'une valeur de référence de vitesse $(v_{ref})$ augmentée d'une valeur de consigne de glissement $(v_o)$ pouvant être prédéfinie, et

b) au moins un élément sommateur de vitesse (3) est prévu, caractérisé en ce que

c) un transmetteur de signaux de courte durée (1, 2, 14, 15, 18, 19) est prévu et produit un signal de réduction de glissement $(S_{19})$,

d) le signal de réduction de glissement $(S_{19})$ est en liaison active pendant une période de courte durée $(\leqq \triangle t_1)$ avec l'élément sommateur de vitesse (3) d'au moins un régulateur de limitation de glissement, dans le sens d'une réduction de la vitesse périphérique de la roue motrice (10) associée, de sorte que la vitesse périphérique de roue à l'intérieur de cette période de courte durée est réduite d'une manière telle que la roue motrice (10) ne glisse plus sur un rail (11), afin d'égaliser la vitesse périphérique de roue $(v_1)$ et la vitesse $(v_F)$ du véhicule et ainsi de déterminer la vitesse du véhicule,

e) un transmetteur de signaux de longue durée (15, 13) est prévu et produit un signal de valeur de référence de vitesse $(v_{ref})$ dont la valeur, au terme de la période de courte durée, correspond à la valeur de vitesse de véhicule déterminée $(v_F)$, et

f) le signal de valeur de référence de vitesse présente une valeur qui croît très lentement pendant une période de longue durée $(\triangle t_2)$ pouvant être prédéfinie.

6. Dispositif de régulation de limitation de glissement suivant la revendication 5, caractérisé en ce que

a) un détecteur de saccades (16) est prévu pour détecter la valeur de la variation dans le temps de l'accélération $|d^2v_{min}/dt^2|$ de la périphérie de la roue,

b) dont l'entrée reçoit au moins un signal de vitesse périphérique de roue $(v_1 ...)$ d'au moins une roue motrice du véhicule ferroviaire, et

c) dont la sortie est en liaison active, par l'intermédiaire d'un élément à valeur de seuil (17) à valeur de seuil de saccade prédéfinie $(v_R'')$, avec le transmetteur de signaux de courte durée (1, 2, 14, 15, 18, 19).

7. Dispositif de régulation de limitation de glissement suivant la revendication 6, caractérisé en ce que le détecteur de saccades (16) est en liaison active du côté d'entrée avec la sortie d'un élément à valeur minimum (12) à l'entrée duquel plusieurs signaux de vitesse périphérique de roues $(v_1, v_2, v_3)$ provenant de plusieurs roues motrices du véhicule ferroviaire sont appliqués et à la sortie duquel est présent un signal de valeur minimum de vitesse $(v_{min})$.

8. Dispositif de régulation de limitation de glissement suivant la revendication 6 ou 7, caractérisé en ce que

a) le transmetteur de signaux de courte durée (1, 2, 14, 15, 18, 19) comporte un régulateur proportionnel par intégration (19) qui produit le signal de réduction de glissement $(S_{19})$ pendant la durée d'un signal de courte durée $(S_{18})$,

b) le signal de courte durée $(S_{18})$ étant déclenché par un signal de sortie de l'élément à valeur de seuil (17) qui est associé à un dépassement par excès de la valeur de seuil de la saccade entre la roue motrice et le rail,

c) le signal de courte durée $(S_{18})$ présentant, en particulier, une durée inférieure ou égale à 3 s.

9. Dispositif de régulation de limitation de glissement suivant la revendication 8, caractérisé en ce que

a) le transmetteur de signaux de longue durée (15, 13) comporte un multivibrateur monostable (15) qui, par le signal de courte durée $(S_{18})$, produit un signal de longue durée $(S_{15})$ d'une longue durée $(\triangle t_2)$ pouvant être prédéfinie,

b) en particulier, la longue durée est d'environ 25 s,

c) le transmetteur de signaux de longue durée (15, 13) comporte, en outre, un intégrateur (13) qui produit le signal de valeur de référence de vitesse $(v_{ref})$ pour la durée de ce signal de longue durée $(S_{15})$,

d) étant entendu qu'à l'entrée de l'intégrateur (13) est appliqué le signal de valeur minimum de vitesse $(v_{min})$,

e) qui est présent à titre de signal de valeur de référence de vitesse $(v_{ref})$ à la sortie de l'intégrateur lorsque aucun signal de longue durée $(S_{15})$ n'est présent, et

f) ce signal de valeur minimum de vitesse $(v_{min})$ constitue la valeur limite supérieur pour le signal de valeur de référence de vitesse $(v_{ref})$ lorsqu'un signal de longue durée $(S_{15})$ est présent.

10. Dispositif de régulation de limitation de vitesse suivant l'une quelconque des revendications 5 à 9, caractérisé en ce que

a) l'élément sommateur de vitesse (3) est en liaison active, par l'intermédiaire d'une entrée « + », avec le signal de vitesse périphérique de roue $(v_1 ...)$ de la roue motrice (10) associée au régulateur de vitesse,

b) par l'intermédiaire d'une entrée «–» avec un signal de vitesse limite de glissement $(v_o)$ pouvant être prédéfinie,

c) par l'intermédiaire d'une autre entrée «–» avec le signal de valeur de référence de vitesse ($v_{ref}$), et

d) par l'intermédiaire d'une autre entrée « + » avec le signal de réduction de glissement ($S_{19}$),

e) l'élément sommateur de vitesse (3) est en liaison active, par l'intermédiaire d'un élément à valeur maximum (4) avec une valeur de comparaison «0»,

f) avec une entrée «–» d'un élément sommateur de courant (5),

g) auquel, par l'intermédiaire d'une autre entrée «–», est appliqué un signal de valeur effective de courant ($i_{M1}$) du groupe d'entraînement ($M_1$) associé, et

h) par l'intermédiaire d'une entrée « + », un signal de valeur de consigne de courant ($i_{soll}$), et

i) la sortie de l'élément sommateur de courant (5) est en liaison active, par l'intermédiaire d'un régulateur de courant (6),

j) avec un convertisseur (7) pour l'alimentation en courant du groupe d'entraînement ($M_1$).

FIG.1

FIG.2

FIG.3

0 141 157